# EUROPÄISCHE PATENTSCHRIFT

(11) **EP 1 223 086 B1**
(45) Veröffentlichungstag und Bekanntmachung des Hinweises auf die Patenterteilung: **28.12.2005**
(21) Anmeldenummer: 02000310.9
(22) Anmeldetag: 03.01.2002
(51) Int. Cl.: B60R 21/26

(54) **Gasgenerator, insbesondere für die Verwendung in Airbag-Systemen**
Gas generator, in particular for use in airbag systems
Générateur de gaz, en particulier pour l'utilisation dans des systèmes de coussins gonflables

(30) Priorität: 12.01.2001 DE 10101489
(43) Veröffentlichungstag der Anmeldung: 17.07.2002
(73) Patentinhaber: Biemold, Wilhelm, 3740 Bilzen (BE)
(72) Erfinder: Biemold, Wilhelm, 3740 Bilzen (BE)
(74) Vertreter: Naeven, Ralf

(56) Entgegenhaltungen:
- EP-A- 0 538 863
- EP-A- 0 873 917
- DE-A- 4 121 039
- DE-A- 19 505 580
- US-A- 5 273 311
- US-A- 5 387 007

## Beschreibung

Die Erfindung betrifft einen Gasgenerator, insbesondere für die Verwendung in Airbag-Systemen, umfassend mindestens eine eine gaserzeugende Ladung enthaltende Brennkammer mit Durchtrittsöffnungen und eine Expansionskammer.

Ein Gasgenerator der vorgenannten Art ist aus der EP 05 38 863 A1 bekannt. Dabei ist die Expansionskammer um die Brennkammer herum angeordnet. In der Expansionskammer sind diverse Leitbleche verteilt, die den aus der Brennkammer radial austretenden Gasstrom mehrfach umlenken und über einen Filter bis zu Gasaustrittsöffnungen in der Umfangsaußenwand des Generators leiten. Die mehrfache Strömungsumleitung sowie der Filter bewirken zum einen eine Abkühlung der aus der Brennkammer austretenden heißen Reaktionsprodukte. Zum anderen ist im Bereich einer der Gasstromumleitungsstellen ein Auffangraum für gasförmige und flüssige Partikel im Strom der Reaktionsprodukte vorgesehen. Die Leitblechanordnungen sind relativ komplex, was bei ihrer Herstellung sowie beim Zusammenbau des Generators einen entsprechenden Aufwand mit sich bringt.

Die EP 05 38 863 A1, die als nächstliegender Stand der Technik angesehen wird, offenbart einen Gasgenerator, insbesondere für die Verwendung in Airbag-Systemen, umfassend mindestens eine eine gaserzeugende Ladung enthaltende Brennkammer mit Durchtrittsöffnungen und eine Expansionskammer, wobei
a) eine in der Expansionskammer im Wesentlichen konzentrisch zur Umfangsaußenwand der Expansionskammer angeordnete, im Wesentlichen ringförmige Abkühlkammer vorgesehen ist, wobei
b) die Abkühlkammer mindestens eine außerhalb der Expansionskammer angeordnete Gasaustrittsöffnung aufweist und
c) die Durchtrittsöffnungen der Brennkammer derart angeordnet sind, dass aus der Brennkammer austretende Reaktionsprodukte zuerst in einen von der Abkühlkammer umgebenen ersten Ringraum der Expansionskammer eintreten.

Aus der DE 195 05 580 A1 ist ebenfalls ein Gasgenerator der eingangs genannten Art bekannt, bei dem die Durchtrittsöffnungen in der Umfangswand der Brennkammer so gestaltet sind, dass im Strom der aus der Brennkammer austretenden Reaktionsprodukte ein Drall aufgegeben wird. Dieser Drall wird zur Fliehkraftabscheidung der flüssigen und festen Partikel genutzt.

Es ist nun Aufgabe der vorliegenden Erfindung, einen Gasgenerator der eingangs genannten Art zur Verfügung zu stellen, der bei einem einfachen Aufbau eine effektive Abscheidung der festen und flüssigen Partikel im Strom der Reaktionsprodukte ermöglicht.

Die Aufgabe wird bei einem Gasgenerator der eingangs genannten Art gelöst durch eine in die Expansionskammer hineinragende und im Wesentlichen konzentrisch zur Umfangsaußenwand der Expansionskammer angeordnete, im Wesentlichen ringförmige Abkühlkammer, wobei die Abkühlkammer innerhalb der Expansionskammer in ihrer der Umfangsaußenwand der Expansionskammer zugewandten äußeren Wand mindestens eine Gaseintrittsöffnung und mindestens eine außerhalb der Expansionskammer angeordnete Gasaustrittsöffnung aufweist und die Durchtrittsöffnungen der Brennkammer derart angeordnet sind, dass aus der Brennkammer austretende Reaktionsprodukte zuerst in einen von der Abkühlkammer umgebenen ersten Ringraum der Expansionskammer eintreten.

Mit diesem Aufbau strömen die aus der Brennkammer austretenden Reaktionsprodukte weitgehend komplett um die Abkühlkammer herum, bevor sie an ihrer äußeren Wand durch die Gaseintrittsöffnung in die Abkühlkammer eintreten. Durch die beim Strom um die Abkühlkammer herum auftretenden Fliehkräfte werden flüssige oder feste Partikel gegen die Wand der Expansionskammer gedrückt und werden bereits hierdurch weitgehend vom Eintritt in die Gaseintrittsöffnung der Abkühlkammer abgehalten. Zudem erlaubt die erfindungsgemäße Konstruktion einen einfachen modularen Aufbau des Gasgenerators: Die ringförmige Abkühlkammer kann als komplettes Modul angefertigt werden. Der Einbau komplexer Leitbleche für den Strom der Reaktionsprodukte ist nicht notwendig.

Der erfindungsgemäße Gasgenerator kann auch so ausgebildet sein, dass der von der äußeren Umfangswand der Brennkammer und der der Brennkammer zugewandten inneren Wand der Abkühlkammer umfangsseitig begrenzte erste Ringraum zu einer ringförmigen Durchlassstelle hin verjüngt ist und in Strömungsrichtung der Reaktionsprodukte gesehen hinter der Durchlassstelle ein zweiter Ringraum mit gegenüber der Durchlassstelle erweitertem Querschnitt gegeben ist.

Der sich verjüngende erste Ringraum, die Durchlassstelle als engste Stelle sowie der zweite Ringraum stellen zusammen eine Art Ringdüse dar. Auf diese Weise lässt sich das sogenannte Düsentrennverfahren anwenden. In bekannter Weise werden beim Durchtritt eines Gemischs aus einem Gas und festen oder flüssigen Partikeln durch eine Düse die Partikel in einem zentralen Strahl gesammelt, während das Gas nach dem Durchtritt durch die Düse seitlich expandiert. So sorgt auch beim erfindungsgemäßen Gasgenerator die Ringdüse dafür, dass die festen und flüssigen Partikel der aus der Brennkammer austretenden Reaktionsprodukte in einen radial innen liegenden Bereich gedrängt werden und somit entlang der inneren Wand der Durchlassstelle gebündelt austreten.

Der erfindungsgemäße Gasgenerator kann auch so ausgebildet sein, dass an den zweiten Ringraum angrenzend eine Partikelauffangkammer mit mindestens einer der Durchlassstelle zugewandten, zur Aufnahme der durch die Durchlassstelle gebündelt durchtretenden festen und/oder flüssigen Partikel der Reaktionsprodukte vorgesehenen Auffangöffnung angeordnet ist.

Die Auffangöffnung ist so zu positionieren, dass der durch die Ringdüse gebündelte Partikelstrahl möglichst vollständig aufgenommen wird. Dabei kann der Partikelstrahl für den Eintritt in die Auffangöffnung durch Bleche oder durch die Geometrie der Wandung der Expansionskammer nach Durchtritt durch die Durchlassstelle in geeigneter Weise gelenkt werden. Somit ist eine wirksame Abscheidung der Partikel im Strom der Reaktionsprodukte realisierbar.

Der erfindungsgemäße Gasgenerator kann auch so ausgebildet sein, dass Mittel zur Erzeugung eines Strömungsdralls der durch die Durchtrittsöffnungen in die Expansionskammer eintretenden Reaktionsprodukte vorgesehen sind.

Ein Strömungsdrall um die Längsmittelachse der Expansionskammer ist eine weitere Möglichkeit zur Abscheidung der Partikel mittels Fliehkraft. Soweit keine Partikelauffangkammer vorhanden ist oder noch Partikel an der Auffangöffnung der Partikelauffangkammer vorbei gelangen, werden diese Partikel aufgrund des Strömungsdralls im Bereich des zweiten Ringraumes von der Abkühlkammer weg gegen die äußere Wand der Expansionskammer oder auch gegen die Wand der Partikelauffangkammer gedrückt und werden auf diese Weise vom Eintritt in die Gaseintrittsöffnung der Abkühlkammer abgehalten.

Es kann vorteilhaft sein, den erfindungsgemäßen Gasgenerator so auszubilden, dass die Durchtrittsöffnungen in einer Stirnwand der Brennkammer angeordnet und die Mittel zur Erzeugung des Strömungsdralls auf der die Durchtrittsöffnungen aufweisenden Stirnwand angebrachte Deflektorelemente sind.

Die Durchtrittsöffnungen und die Deflektorelemente können mit geringem Aufwand angebracht werden und bilden eine sehr effektive Möglichkeit der Strömungsdrallerzeugung. Zudem ist der Vorteil gegeben, dass beim Aufprall der Reaktionsprodukte gegen die Deflektorelemente die festen oder flüssigen Partikel aufgesprengt werden können. Die dabei erzeugte größere Gesamtoberfläche führt zu einem schnelleren Verdampfen der Partikel.

Weiterhin kann der erfindungsgemäße Gasgenerator so ausgebildet sein, dass zur Aufrechterhaltung des Strömungsdralls im Expansionsraum Zusatzdeflektorelemente angebracht sind. Dabei kann es vorteilhaft sein, den Gasgenerator so auszubilden, dass die Zusatzdeflektorelemente an der Abkühlkammer angebracht sind.

Der erfindungsgemäße Gasgenerator kann auch so ausgebildet sein, dass zumindest im Bereich des ersten sowie des zweiten Ringraumes die die Expansionskammer begrenzenden Wände sowie die in die Expansionskammer hineinragenden Wände der Abkühlkammer aus Metallblech gefertigt sind und ein die Metallblechkonstruktion umgebendes Außengehäuse aus Kunststoff ist.

Aufgrund der hohen Temperaturen der Reaktionsprodukte sind hinreichend temperaturstabile Metallbleche vonnöten. Das Außengehäuse, das entweder gar nicht mit den Reaktionsprodukten oder allenfalls nach hinreichender Abkühlung in Kontakt kommt, kann hingegen aus preiswerterem und zudem im Allgemeinen leichteren Kunststoff hergestellt werden. Hierfür geeignet, weil hitzebeständig, sind z.B. Polyamide, wobei nötigenfalls der Kunststoffkörper mit Glasfasern verstärkt werden kann. Polyamidkörper werden bereits zur Aufnahme des Airbags selbst eingesetzt. Es ist möglich, dem Polyamid brandhemmende Zusatzstoffe zuzufügen. Je nach der Art des verwendeten Treibsatzes können so hohe Temperaturen erzeugt werden, dass es erforderlich sein kann, zumindest teilweise zwischen Kunststoffaußengehäuse und den Außenwänden der Expansionskammer eine wärmedämmende Folie, z.B. aus Aluminium oder einem Aluminium-Keramik-Verbund mit einer Dicke von beispielsweise 0,1 bis 0,2 mm vorzusehen.

Aufgrund der einfachen Geometrie des erfindungsgemäßen Gasgenerators ist es möglich, ihn aus einfachen Modulen zusammenzusetzen, die die Verwendung eines Kunststoffaußengehäuses wirtschaftlich sinnvoll machen.

Der erfindungsgemäße Gasgenerator kann auch so ausgebildet sein, dass die Abkühlkammer mindestens einen Feinfilter aus Metall, Keramik oder einem Keramik-Metall-Verbund aufweist. Der Verbundkörper kann z.B. aus einem mit einer Keramik beschichteten Metallkörper aufgebaut sein.

Schließlich kann der erfindungsgemäße Gasgenerator auch so ausgebildet sein, dass zusätzlich in Strömungsrichtung hinter dem Feinfilter ein metallischer Grobfilter angeordnet ist. Der durchschnittliche Porendurchmesser des Grobfilters sollte den des Feinfilters um etwa das 1,2- bis 1,5-fache übersteigen.

Die Filter dienen im Wesentlichen zur weiteren Abkühlung der Reaktionsprodukte, die aufgrund der in der Expansionskammer gegebenen Abscheidung der Partikel im Wesentlichen nur noch gasförmig ist. Die Filter dienen allerdings auch zum Auffangen von Partikeln, die insbesondere nach Nachlassen des Zündungsdrucks aufgrund der gegebenen Strömung aus der Expansionskammer in die Abkühlkammer hineingesaugt werden.

Im Folgenden wird eine bevorzugte Ausbildungsform des erfindungsgemäßen Gasgenerators anhand von Figuren dargestellt.

Es zeigt schematisch
- Fig. 1:: einen Gasgenerator im seitlichen Querschnitt,
- Fig. 2:: zum Teil ein oberes Außengehäuseteil des Gasgenerators in Aufsicht,
- Fig. 3:: das Außengehäuseoberteil gemäß Fig. 2 zusammen mit Filtereinsätzen im seitlichen Querschnitt,
- Fig. 4:: ein Abkühlkammermodul,
- Fig. 5:: eine Brennkammer mit Zünder und Treibladung
- Fig. 6:: ein Außengehäuseunterteil mit Partikelauffangkammermodul.

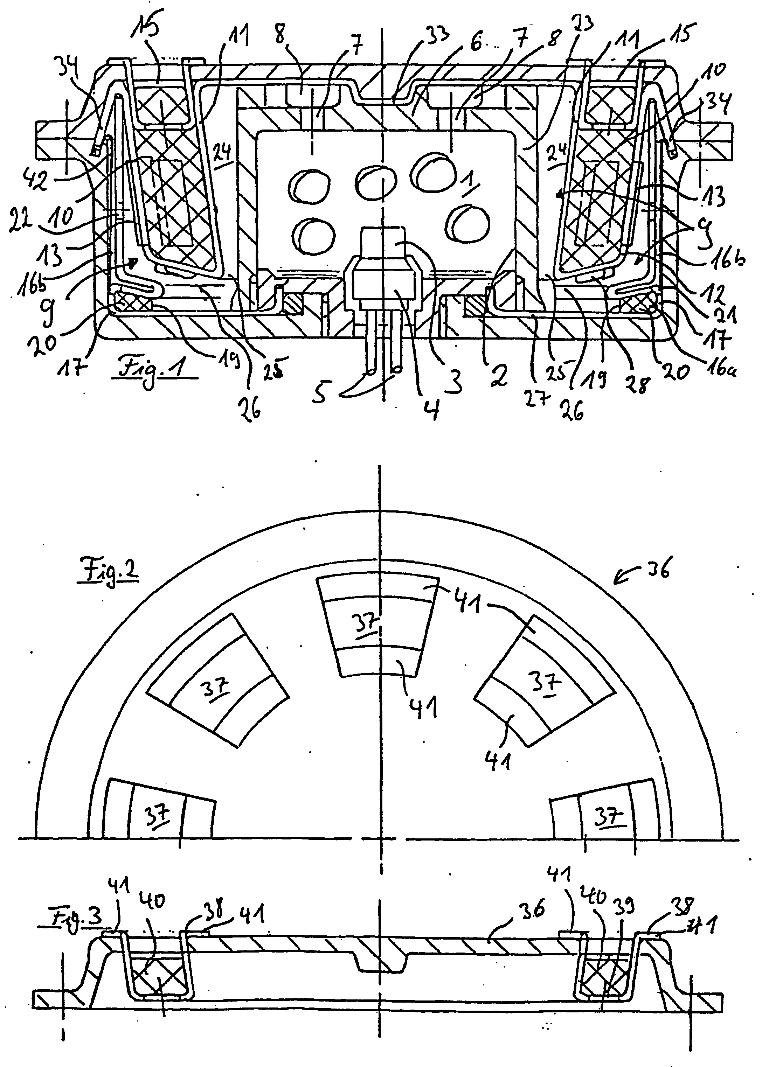

Fig. 1 zeigt einen Gasgenerator in zusammengebautem Zustand, während die Figuren 2 bis 6 einzelne Module des Gasgenerators darstellen.

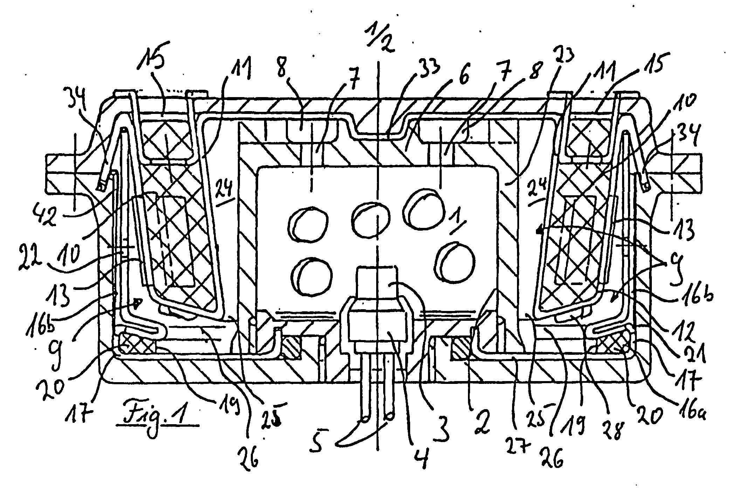

Eine zur Gaserzeugung vorgesehene Treibladung 1 in Tablettenform ist in einer in Fig. 5 gesondert dargestellten Brennkammer 2 untergebracht, in die der Kopf 3 eines Zünders 4 hineinragt. Über elektrische Leitungen 5 kann der Zündungsvorgang gestartet werden. Die Brennkammer 2 weist in ihrer oberen Stirnwand 6 eine Reihe von Durchtrittsöffnungen 7 auf, durch die bei Zündung entstehende Reaktionsprodukte austreten. Die Reaktionsprodukte treffen nach Durchtritt durch die Durchtrittsöffnungen 7 auf Deflektorelemente 8, die derart angeordnet und ausgerichtet sind, dass der Strömung der Reaktionsprodukte ein Drall um die Längsmittelachse des Gasgenerators gegeben wird. Von den Deflektorelementen 8 gelangen die Reaktionsprodukte in die die Brennkammer 2 umgebende Expansionskammer 9. In die Expansionskammer 9 hinein ragt eine ringförmige Abkühlkammer 10, die durch das in Fig. 4 gesondert dargestellte Abkühlkammermodul 11 gebildet ist. Das Abkühlkammermodul 11 ist aus einem Stück aus Metallblech gefertigt. Das Abkühlkammermodul 11 weist an seiner Außenwand 12 Gaseintrittsöffnungen 13 auf. In der Abkühlkammer 10 befindet sich ein Feinfilter 14 aus Metall oder einem Keramik-Metall-Verbund, der zur Kühlung der gasförmigen Reaktionsprodukte dient. Durch Gasaustrittsöffnungen 15 können die gasförmigen Reaktionsprodukte nach außen, z. B. in einen Airbag hinein gelangen.

In der Expansionskammer 9 ist eine Partikelauffangkammer 16 vorgesehen, welche durch ein Partikelauffangkammermodul 17 und ein Kammeraußenwandelement 42, z.B. aus Metallblech begrenzt ist. Je nach Art der Treibladung 1 und der zu erwartenden Temperaturen im Bereich der Partikelauffangkammer 16 kann auf das gesonderte Kammeraußenwandelement 42 verzichtet werden. Die Partikelauffangkammer 16 kann dann unmittelbar vom Außengehäuseunterteil 18 begrenzt werden.

Außengehäuseunterteil 18, Partikelauffangkammermodul 17 und Kammeraußenwandelement 42 sind in Fig. 6 gesondert dargestellt. Das Partikelauffangkammermodul 17 ist rotationssymmetrisch und weist eine ringförmige Auffangöffnung 19 auf, hinter der sich in Strömungsrichtung der Reaktionsprodukte gesehen in einem vorderen Kammerteil 16a ein Metallfilter 20 anschließt, der den Großteil der Partikel auffängt. Durchtritte 21 ermöglichen den Zugang zum hinteren Kammerteil 16b. Durch Druckausgleichöffnungen 22 können gasförmige Reaktionsprodukte aus dem hinteren Kammerteil 16b in den übrigen Teil der Expansionskammer 9 gelangen.

Das Abkühlkammermodul 11 erzeugt zusammen mit der Umfangswand 23 der Brennkammer 2 einen ersten Ringraum 24, der sich zu einer ringförmigen Durchlassstelle 25 hin verjüngt. In Strömungsrichtung hinter der Durchlassstelle 25 schließt sich ein zweiter Ringraum 26 an, der einen sich gegenüber der Durchlassstelle 25 deutlich vergrößernden Querschnitt aufweist. Der erste Ringraum 24, die Durchlassstelle 25 und der zweite Ringraum 26 bilden zusammen eine Art Ringdüse. Diese Ringdüse bewirkt, dass an der Durchlassstelle 25 eine Bündelung der festen und flüssigen Partikel im Strom der Reaktionsprodukte gemäß dem Düsentrennverfahren stattfindet. Die festen und flüssigen Partikel sammeln sich im Wesentlichen entlang der Umfangswand 23 der Brennkammer, während die gasförmigen Bestandteile der Reaktionsprodukte in den zweiten Ringraum 26 expandieren. Die festen und flüssigen Partikel werden entlang der Umfangswand 23 und der unteren Stützwand 27 des Partikelauffangkammermoduls 17 zur Auffangöffnung 19 der Partikelauffangkammer 16a, 16b geführt und zum weit überwiegenden Teil durch den Metallfilter 20 festgehalten. Die dann von nahezu allen festen und flüssigen Partikeln befreiten Reaktionsprodukte gelangen durch den zweiten Ringraum 26 in die Gaseintrittsöffnungen 13 des Abkühlkammermoduls 11. Auf dem Weg dorthin werden die Reaktionsprodukte an Zusatzdeflektorelementen 28 entlang geführt, so dass der Strömungsdrall aufrechterhalten wird. Aufgrund des Strömungsdralls werden evtl. noch im Strom der Reaktionsprodukte verbliebene feste oder flüssige Partikel an die Seitenwand 29 des Partikelauffangkammermoduls 17 gedrückt und vom Eintritt in die Gaseintrittsöffnungen 13 abgehalten.

Aufgrund des modularen Aufbaus ist der Generator auf einfache Weise zusammenzusetzen. In das Außengehäuseunterteil 18 werden das Kammeraußenwandelement 42 und das Partikelauffangkammermodul 17 eingesetzt (siehe Fig. 6). Die mit der Treibladung 1 sowie dem Zünder 4 versehene Brennkammer 2 wird anschließend in die dafür vorgesehenen Öffnungen 30 und 31 des Partikelauffangkammermoduls 17 bzw. Außengehäuseunterteils 18 eingesetzt. Die Verbindung erfolgt über ein Gewinde 32a und 32b. Mit dem Einsatz der Brennkammer 2 wird gleichzeitig die untere Stützwand 27 des Partikelauffangkammermoduls 17 am Außengehäuseunterteil 18 fixiert. An der Brennkammer 2 sind bereits die Deflektorelemente 8, z.B. durch Reibschweißen fixiert.

Anschließend wird das Abkühlkammermodul 11 eingesetzt. Es stützt sich zum einen auf eine zentrale Aufnahme 33 auf der Brennkammer 2 und außen auf dem Partikelauffangkammermodul 17 ab. Zudem greift ein Kragen 34 des Abkühlkammermoduls 11 in eine ringförmige Nut 35 (Fig. 6) im Außengehäuseunterteil 18.

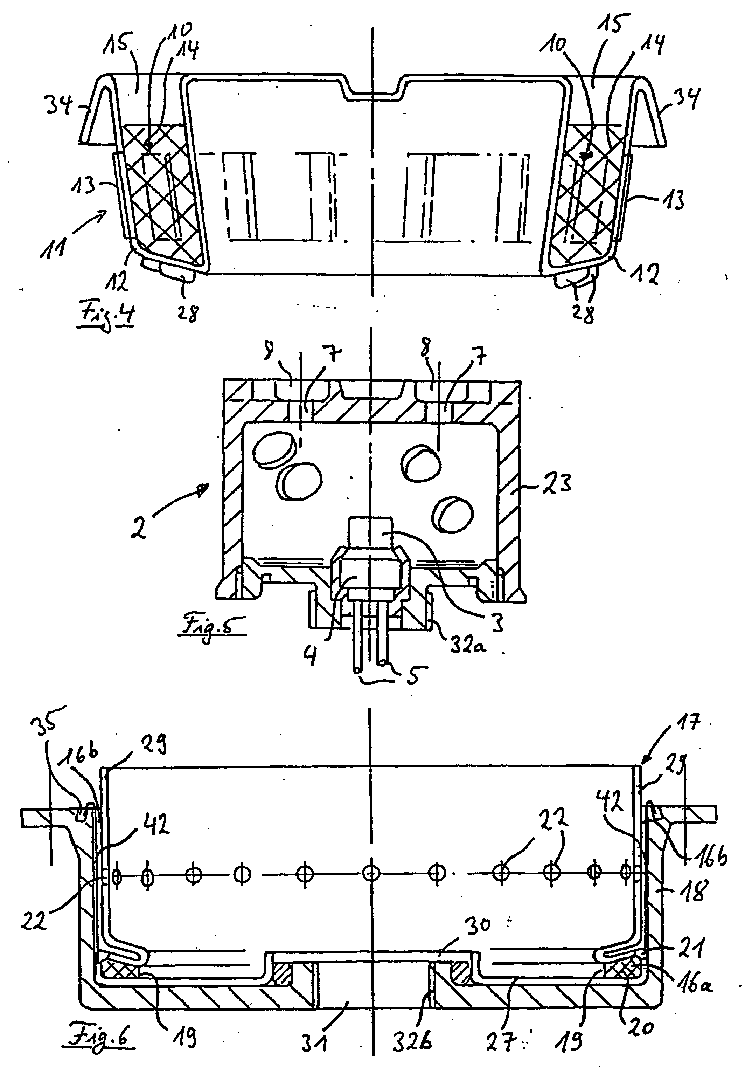

An einem Außengehäuseoberteil 36 (Fig.2 und 3) ist ein ringförmiger Filterkorb 38 fixiert, in dem ein Grobfilter 40 aus Metall oder einem Keramik-Metall-Verbund eingelegt ist. Der Filterkorb 38 ist mit durch Auslassöffnungen 37 geführten und umgebogenen Halteelementen 41 am Außengehäuseoberteil 36 fixiert. Das Außengehäuseoberteil 36 mit Filterkorb 38 wird aufgesetzt und mittels hier nicht dargestellter Schrauben am Außengehäuseunterteil 18 fixiert, wodurch gleichzeitig das Partikelauffangkammermodul 17 festgelegt wird. Der Filterkorb 38, der an seiner Unterseite eine ringförmig durchgehende Gasdurchtrittsöffnung 39 aufweist, ragt dabei in das Abkühlkammermodul 11 hinein.

Stimwand 6 und Umfangswand 23 der Brennkammer 2, die Wände des Abkühlkammermoduls 11 sowie des Partikelauffangkammermoduls 17 sind aus Metallblech geformt und daher hinsichtlich der zu erwartenden Temperaturen der Reaktionsprodukte hinreichend stabil. Sowohl das Außengehäuseoberteil 36 als auch das Außengehäuseunterteil 18 kommen mit den Reaktionsprodukten innerhalb des Gasgenerators nicht in unmittelbaren Kontakt. Aufgrund dessen können Außengehäuseoberteil 36 und Außengehäuseuntertell 18 aus einem Kunststoff, vorzugsweise aus einem glasfaserverstärkten Polyamid, hergestellt werden.

### Bezugszeichenliste

- 1: Treibladung
- 2: Brennkammer
- 3: Zündkopf
- 4: Zünders
- 5: elektrische Leitung
- 6: Stirnwand
- 7: Durchtrittsöffnung
- 8: Deflektorelement
- 9: Expansionskammer
- 10: Abkühlkammer
- 11: Abkühlkammermodul
- 12: Außenwand
- 13: Gaseintritt
- 14: Metallfeinfilter
- 15: Gasaustrittsöffnung
- 16: Partikelauffangkammer
- 17: Partikelauffangkammermodul
- 18: Außengehäuseunterteil
- 19: Auffangöffnung
- 20: Metallfilter
- 21: Durchtritt
- 22: Druckausgleichsöffnungen
- 23: Umfangswand
- 24: erster Ringraum
- 25: Durchlassstelle
- 26: zweiter Ringraum
- 27: untere Stützwand
- 28: Zusatzdeflektorelement
- 29: Seitenwand
- 30: Öffnung
- 31: Öffnung
- 32: Gewinde
- 33: Aufnahme
- 34: Kragen
- 35: Nut
- 36: Außengehäuseoberteil
- 37: Auslassöffnungen
- 38: Filterkorb
- 39: Gasdurchtrittsöffnung
- 40: Grobfilter
- 41: Halteelement
- 42: Kammeraußenwandelement

## Patentansprüche

1. Gasgenerator, insbesondere für die Verwendung in Airbag-Systemen, umfassend mindestens eine eine gaserzeugende Ladung (1) enthaltende Brennkammer (2) mit Durchtrittsöffnungen (7) und eine Expansionskammer (9),
wobei
a) eine in die Expansionskammer (9) hineinragende und im Wesentlichen konzentrisch zur Umfangsaußenwand (23) der Expansionskammer (9) angeordnete, im Wesentlichen ringförmige Abkühlkammer (10) vorgesehen ist, wobei
b) die Abkühlkammer (10) innerhalb der Expansionskammer (9) in ihrer der Umfangsaußenwand (23) der Expansionskammer (9) zugewandten äußeren Wand (12) mindestens eine Gaseintrittsöffnung (13) und mindestens eine außerhalb der Expansionskammer (9) angeordnete Gasaustrittsöffnung (15) aufweist und
c) die Durchtrittsöffnungen (7) der Brennkammer (2) derart angeordnet sind, dass aus der Brennkammer (2) austretende Reaktionsprodukte zuerst in einen von der Abkühlkammer (10) umgebenen ersten Ringraum (24) der Expansionskammer (9) eintreten.

2. Gasgenerator nach Anspruch 1, **dadurch gekennzeichnet, dass** der von der äußeren Umfangswand (23) der Brennkammer (2) und der der Brennkammer (2) zugewandten inneren Wand der Abkühlkammer (10) umfangsseitig begrenzte erste Ringraum (24) zu einer ringförmigen Durchlassstelle (25) hin verjüngt ist und in Strömungsrichtung der Reaktionsprodukte gesehen hinter der Durchlassstelle (25) ein zweiter Ringraum (26) mit gegenüber der Durchlassstelle (25) erweitertem Querschnitt gegeben ist.

3. Gasgenerator nach Anspruch 2, **dadurch gekennzeichnet, dass** an den zweiten Ringraum (26) angrenzend eine Partikelauffangkammer (16) mit mindestens einer der Durchlassstelle (25) zugewandten, zur Aufnahme der durch die Durchlassstelle (25) gebündelt durchtretenden festen und/oder flüssigen Partikel der Reaktionsprodukte vorgesehenen Auffangöffnung (19) angeordnet ist.

4. Gasgenerator nach einem der Ansprüche 1 bis 3, **dadurch gekennzeichnet, dass** Mittel zur Erzeugung eines Strömungsdralls der durch die Durchtrittsöffnungen (7) in die Expansionskammer (9) eintretenden Reaktionsprodukte vorgesehen sind.

5. Gasgenerator nach Anspruch 4, **dadurch gekennzeichnet, dass** die Durchtrittsöffnungen (7) in einer Stimwand (6) der Brennkammer (2) angeordnet und die Mittel zur Erzeugung des Strömungsdralls auf der die Durchtrittsöffnungen (7) aufweisenden Stimwand (6) angebrachte Deflektorelemente (8) sind.

6. Gasgenerator nach Anspruch 4 oder 5, **dadurch gekennzeichnet, dass** zur Aufrechterhaltung des Strömungsdralls im Expansionsraum (9) Zusatzdeflektorelemente (28) angebracht sind.

7. Gasgenerator nach Anspruch 6, **dadurch gekennzeichnet, dass** die Zusatzdeflektorelemente (28) an der Abkühlkammer (10) angebracht sind.

8. Gasgenerator nach einem der Ansprüche 1 bis 7, **dadurch gekennzeichnet, dass** zumindest im Bereich des ersten (24) sowie des zweiten Ringraumes (26) die die Expansionskammer (9) begrenzenden Wände (23, 27, 29) sowie die in die Expansionskammer (9) hineinragenden Wände (12) der Abkühlkammer (10) aus Metallblech gefertigt sind und ein die Metallblechkonstruktion umgebendes Außengehäuse (18, 36) aus Kunststoff ist.

9. Gasgenerator nach einem der Ansprüche 1 bis 8, **dadurch gekennzeichnet, dass** die Abkühlkammer (10) mindestens einen Feinfilter (14) aus Metall, Keramik oder einem Keramik-Metall-Verbund aufweist.

10. Gasgenerator nach Anspruch 9, **dadurch gekennzeichnet, dass** zusätzlich in Strömungsrichtung hinter dem Feinfilter (14) ein Grobfilter (40) aus Metall, Keramik oder einem Keramik-Metall-Verbund angeordnet ist.

## Claims

1. Gas generator, in particular for use in airbag systems, comprising at least one combustion chamber (2) which contains a gas-generating charge (1) and has through-openings (7) and an expansion chamber (9), whereby
a) an essentially annular cooling chamber (10) is provided which projects into the expansion chamber (9) and is arranged essentially concentrically with respect to the circumferential outer wall (23) of the expansion chamber (9),
b) the cooling chamber (10) within the expansion chamber (9) having, in its outer wall (12) facing the circumferential outer wall (23) of the expansion chamber (9), at least one gas inlet opening (13) and at least one gas outlet opening (15) arranged outside the expansion chamber (9) and
c) the through-openings (7) of the combustion chamber (2) being arranged in such a way that reaction products emerging from the combustion chamber (2) firstly enter a first annular space (24), surrounded by the cooling chamber (10), of the expansion chamber (9).

2. Gas generator according to Claim 1, **characterized in that** the first annular space (24), which is bounded at the circumference by the outer circumferential wall (23) of the combustion chamber (2) and the inner wall, facing the combustion chamber (2), of the cooling chamber (10), is tapered to form an annular passage point (25), and a second annular space (26) with a cross section which is widened in comparison with the passage point (25) is provided upstream of the passage point (25), viewed in the direction of stream of the reaction products.

3. Gas generator according to Claim 2, **characterized in that** a particle collection chamber (16) with at least one collection opening (19) which faces the passage point (25), and is provided to collect the solid and/or fluid particles of the reaction products which pass in bundled fashion through the passage point (25), is arranged adjacent to the second annular space (26).

4. Gas generator according to one of Claims 1 to 3, **characterized in that** means are provided for generating a swirl of the reaction products entering the expansion chamber (9) through the through-openings (7).

5. Gas generator according to Claim 4, **characterized in that** the through-openings (7) are arranged in an end wall (6) of the combustion chamber (2), and the means for generating the swirl are deflector elements (8) mounted on the end wall (6) having the through-openings (7).

6. Gas generator according to Claim 4 or 5, **characterized in that**, in order to maintain the swirl, supplementary deflector elements (28) are mounted in the expansion chamber (9).

7. Gas generator according to Claim 6, **characterized in that** the supplementary deflector elements (28) are mounted on the cooling chamber (10).

8. Gas generator according to one of Claims 1 to 7, **characterized in that** the walls (23, 27, 29) which bound the expansion chamber (9) and the walls (12) of the cooling chamber (10) which project into the expansion chamber (9) are fabricated from sheet metal at least in the vicinity of the first annular space (24) and of the second annular space (26), and an outer housing (18, 36) which surrounds the sheet metal structure is made of plastic.

9. Gas generator according to one of Claims 1 to 8, **characterized in that** the cooling chamber (10) has at least one fine filter (14) made of metal, ceramic or a ceramic/metal composite.

10. Gas generator according to Claim 9, **characterized in that** a coarse filter (40) made of metal, ceramic or a ceramic/metal composite is additionally arranged upstream of the fine filter (14) in the direction of flow.

## Revendications

1. Générateur de gaz, notamment pour l'utilisation dans des systèmes d'airbag, comprenant au moins une chambre de combustion (2) contenant une charge (1) produisant du gaz, avec des ouvertures de passage (7) et une chambre d'expansion (9),
dans lequel :
a) on prévoit une chambre de refroidissement (10) essentiellement de forme annulaire, pénétrant dans la chambre d'expansion (9) et disposée essentiellement concentriquement à la paroi extérieure périphérique (23) de la chambre d'expansion (9),
b) la chambre de refroidissement (10) présentant à l'intérieur de la chambre d'expansion (9) dans sa paroi extérieure (12) tournée vers la paroi extérieure périphérique (23) de la chambre d'expansion (9) au moins une ouverture d'entrée de gaz (13) et au moins une ouverture de sortie de gaz (15) disposée en dehors de la chambre d'expansion (9) et
c) les ouvertures de passage (7) de la chambre de combustion (2) sont disposées de telle sorte que des produits de réaction sortant de la chambre de combustion (2) entrent d'abord dans un premier espace annulaire (24) de la chambre d'expansion (9) entouré par la chambre de refroidissement (10).

2. Générateur de gaz selon la revendication 1, **caractérisé en ce que** le premier espace annulaire (24) limité du côté périphérique par la paroi périphérique extérieure (23) de la chambre de combustion (2) et la paroi interne de la chambre de refroidissement (10) tournée vers la chambre de combustion (2) est rétréci vers un point de passage annulaire (25) et **en ce que** vu dans la direction d'écoulement des produits de réaction, derrière le point de passage (25), est prévu un deuxième espace annulaire (26) ayant une section transversale élargie par rapport au point de passage (25).

3. Générateur de gaz selon la revendication 2, **caractérisé en ce qu'**une chambre de collecte de particules (16) adjacente au deuxième espace annulaire (26) est prévue avec au moins une ouverture de collecte (19) tournée vers le point de passage (25), prévue pour recevoir les particules solides et/ou liquides des produits de réaction traversant en faisceau le point de passage (25).

4. Générateur de gaz selon l'une quelconque des revendications 1 à 3, **caractérisé en ce que** l'on prévoit des moyens de production d'un écoulement tourbillonnaire des produits de réaction entrant dans la chambre d'expansion (9) à travers les ouvertures de passage (7).

5. Générateur de gaz selon la revendication 4, **caractérisé en ce que** les ouvertures de passage (7) sont disposées dans une paroi frontale (6) de la chambre de combustion (2) et les moyens de production de l'écoulement tourbillonnaire sont des éléments de déflexion (8) prévus sur la paroi frontale (6) présentant les ouvertures de passage (7).

6. Générateur de gaz selon la revendication 4 ou 5, **caractérisé en ce que** pour maintenir l'écoulement tourbillonnaire dans l'espace d'expansion (9), on prévoit des éléments de déflexion supplémentaires (28).

7. Générateur de gaz selon la revendication 6, **caractérisé en ce que** les éléments de déflexion supplémentaires (28) sont prévus sur la chambre de refroidissement (10).

8. Générateur de gaz selon l'une quelconque des revendications 1 à 7, **caractérisé en ce qu'**au moins dans la région du premier (24) ainsi que du deuxième espace annulaire (26), les parois (23, 27, 29) délimitant la chambre d'expansion (9) ainsi que les parois (12) de la chambre de refroidissement (10) pénétrant dans la chambre d'expansion (9) sont fabriquées en tôle métallique et un boîtier extérieur (18, 36) entourant la construction en tôle métallique est fabriqué en plastique.

9. Générateur de gaz selon l'une quelconque des revendications 1 à 8, **caractérisé en ce que** la chambre de refroidissement (10) présente au moins un filtre fin (14) en métal, en céramique ou en un composite métal-céramique.

10. Générateur de gaz selon la revendication 9, **caractérisé en ce qu'**un filtre grossier (40) en métal, en céramique ou en un composite métal-céramique est disposé en outre dans le sens de l'écoulement derrière le filtre fin (14).
